# EUROPEAN PATENT APPLICATION

(11) **EP 2 525 600 A1**
(43) Date of publication of application: **21.11.2012**
(21) Application number: 11789088.9
(22) Date of filing: 17.03.2011
(51) Int. Cl.: H04W 28/02

(54) **METHOD AND APPARATUS FOR PROCESSING BUFFER STATUS REPORT**

(30) Priority: 31.05.2010 CN 201010188423
(71) Applicant: ZTE Corporation, Shenzhen, Guangdong 518057 (CN)
(72) Inventor: CHEN, Si, Shenzhen Guangdong 518057 (CN)
(74) Representative: Tischner, Oliver
(86) International application number: PCT/CN2011/071936
(87) International publication number: WO 2011/150709

(57) **Abstract**

A method and apparatus for processing a Buffer Status Report (BSR) are disclosed in the disclosure. At least one of the following processing steps is performed when the BSR is transmitted using Contention Based (CB) uplink resources: A. restarting no retransmission BSR timer (retxBSR_Timer) when an uplink grant indicating CB uplink resources is received; B. restarting no retxBSR_Timer and/or no periodic BSR timer (PeriodicBSR_Timer) when the uplink resources are available; C. cancelling no triggered BSR when a BSR-related Media Access Control Protocol Data Unit (MAC PDU) is formed by occupying the uplink resources; and cancelling the triggered BSR when an indication for a successful transmission of the BSR-related MAC PDU is received; D. determining, according to a type of a triggered BSR, whether or not to cancel the triggered BSR, when a BSR-related MAC PDU is formed by occupying the uplink resources; and cancelling the triggered BSR when an indication for a successful transmission of the BSR-related MAC PDU is received. With the disclosure, the influence on User Equipment (UE) due to the failure of the BSR transmission when the BSR is transmitted by occupying the CB uplink transmission resources is decreased.

## Description

### TECHNICAL FIELD

The disclosure relates to the resource distribution technology in the field of mobile communication, and more particularly to a method and apparatus for processing a Buffer Status Report (BSR).

### BACKGROUND

In an Evolved Universal Terrestrial Radio Access Network (E-UTRAN) of the 3^{rd} generation mobile telecommunications Long Term Evolution (LTE) system, the data on the uplink is transmitted by a Physical Uplink Shared Channel (PUSCH). Uplink radio resources are distributed to each User Equipment (UE) by an Evolved NodeB (eNB). The access technology adopted by the E-UTRAN is the Orthogonal Frequency Division Multiplexing (OFDM) technology. Compared with the 2^{nd} generation mobile communications system, the radio resource management of the E-UTRAN system features large bandwidth and multiple time courses. The radio resources of the E-UTRAN system appear in a 2D form consisting of time and frequency, which greatly increases the number of users carried.

To distribute resources and provide services according to the demands of each UE, and thus, realize better multiplexing performance during uplink transmission while making full use of the system bandwidth efficiently and flexibly, a specific control message is customized by the LTE system for the user during the resource distribution in the uplink transmission, wherein the control message dedicated to performing resource distributing on the PUSCH is sent to the UE by the eNB. The resource distribution control message, also known as the Uplink Grant (UL Grant), is sent on a Physical Downlink Control Channel (PDCCH).

Usually, a UE needs to use contended resources during the initial data transmission stage, e.g. after successfully accessing a network, the UE can enter a dormant state during an interval of data transmission to save battery cost of the UE and resource overhead of the network. The network may reserve no resources or only reserve a few resources for the UE. When there is uplink data to be transmitted, the UE sends a signaling to notify the network by random access or by the few reserved resources, e.g. the UE sends a signaling via a dedicated signaling channel to notify the network to acquire the subsequent uplink transmission resources.

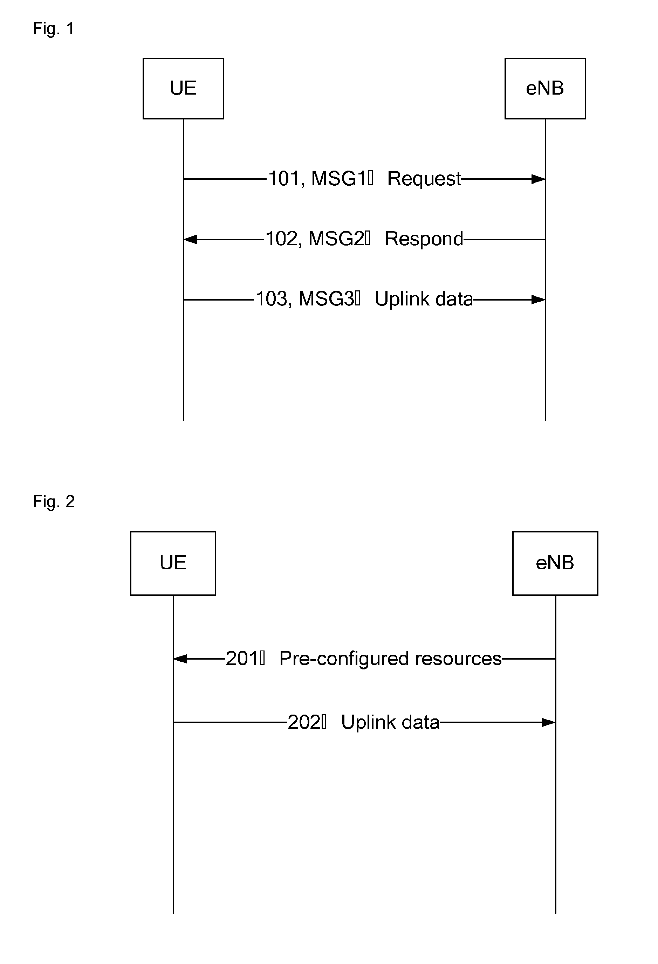

Using the method above for acquiring the subsequent uplink transmission resources by random access or by the reserved resources, as shown in Fig. 1, in the transmitting process, when the UE needs to transmit data on the uplink, it sends a request (the MSG1 in Step 101) to the eNB first, and the UE is able to actually transmit the data on the uplink (the MSG3 in Step 103) after the eNB responds (the MSG2 in Step 102). The two steps above (Step 101 and Step 102) result in a time delay between the arrival of the uplink data and substantial transmission of the uplink data by the UE. Generally, in the LTE system, the time delay is 11.5ms using the method of sending a Scheduling Request (SR) on a Physical Uplink Control Channel (PUCCH) to acquire the subsequent uplink transmission resources.

In order to reduce the time delay above, the current solution is to schedule resources in advance. As shown in Fig. 2, a dedicated uplink resource is always distributed to the UE by the network side (Step 201) whether or not the UE has data to be transmitted, and the UE can utilize the dedicated uplink resource to transmit the data (Step 202) when the UE needs to transmit the data on the uplink. In other words, the UE can perform the uplink data transmission on the MSG1, and the transmission time delay can be reduced to 5.5ms in the LTE system. However, the solution has the following disadvantage: the eNB needs to reserve part of the dedicated resources for the UE whether or not there is uplink data to be transmitted by the UE, thus resulting in resource waste.

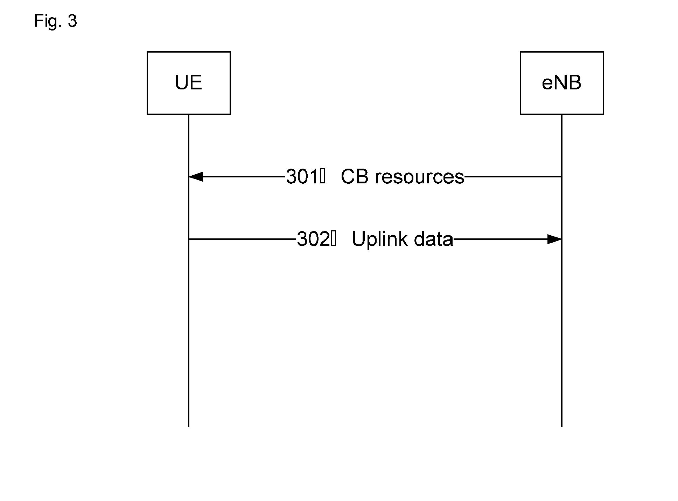

In order to avoid the resource waste above, the dedicated uplink resources can be replaced with Contention Based (CB) uplink resources (Step 301), i.e. CB uplink transmission, also called CB transmission. The uplink resources are shared by several UEs to allow the UE to transmit the data through contention (Step 302) when the UE needs to use the uplink resources. As shown in Fig. 3, the method can achieve better performance when there are relatively few UEs sharing the resources.

In order to ensure that the radio resources are distributed to each UE reasonably, the LTE system requires the UE to report the status of the data quantity in the buffer area of the UE. The report is reported to the eNB in a BSR form. In the LTE system, the Logical Channels (LCH) of the UE are divided into 4 Logical Channel Groups (LCGs) according to the priorities, and the BSR reports the group number of each LCG and the quantity of the pending data in the LCHs. It can be seen that the BSR only reports the quantity of the pending data in the LCHs that belong to the LCGs, and does not report the quantity of the pending data in the LCHs which do not belong to the LCGs. In order to describe briefly, the LCHs hereinafter refer to the LCHs which belong to the LCGs and the uplink data refers to the pending uplink data.

The BSR is packaged into an Media Access Control (MAC) Control Element (CE), also known as a BSR MAC CE, in an MAC Protocol Data Unit (PDU). The MAC PDU is transmitted on the PUSCH. The UE sends an MAC PDU, in which a BSR MAC CE is contained, to report status of the data quantity in the buffer area of the UE.

Since the BSR is important reference information for the eNB to reasonably perform radio resource scheduling for the UE, a variety of BSR types and transmission rules are specified by the LTE system. The BSRs are divided into regular BSRs, periodic BSRs and padding BSRs according to different events which trigger the BSRs,

wherein the triggering conditions of a regular BSR include:

A. there is uplink data in the buffer area of the UE and new uplink data arrives, in addition, the LCH to which the new uplink data belongs has a higher priority than the LCH to which the existing uplink data belongs; or

B. there is uplink data in the buffer area of the UE, and a retransmission BSR timer (retxBSR_Timer) times out; or

C. there is no uplink data in the buffer area of the UE, and new uplink data arrives.

The triggering condition of a periodic BSR is that: a periodic BSR timer (PeriodicBSR_Timer) times out.

The triggering condition of a padding BSR is that: when there are uplink resources, and the padding part in the uplink resources is sufficient to accommodate the BSR MAC CE, i.e. the number of padding bits in the uplink resources is larger than or equal to the size of the BSR MAC CE plus the size of the MAC subheader of the BSR MAC CE.

When neither the regular BSR nor the periodic BSR is transmitted on the uplink, the padding BSR can enable the eNB to learn changes of the LCG data in the buffer area of the UE more timely.

For the regular BSR and the periodic BSR, if there are multiple LCGs with pending data within the Transmission Time Interval (TTI) of the BSR transmission, the reported BSR is called a long BSR. Otherwise, the reported BSR is called a short BSR.

For the padding BSR, when the number of padding bits is larger than or equal to the size of the long BSR plus the size of the subheader of the long BSR, the reported BSR is known as a long BSR; when there are multiple LCGs with pending data within the TTI of the BSR transmission, the reported BSR is called a truncated BSR; when there are no multiple LCGs with pending data within the TTI of the BSR transmission, the reported BSR is known as a short BSR.

In the case that there is at least one triggered BSR which has not been cancelled, when there are uplink resources for new transmission in the current TTI, the UE generates the BSR MAC CE. An MAC PDU includes one BSR MAC CE at most, i.e. only one BSR MAC CE will be sent even if the BSR is triggered by multiple events.

The UE performs the following processes for a BSR-related timer:

1. when the BSR reported by the generated BSR MAC CE is not a truncated BSR, the UE starts or restarts the PeriodicBSR_Timer;

2. when there is an uplink grant for the new transmission, the retxBSR_Timer is started or restarted;

3. when there is an indication for the uplink grant for the new transmission, the UE restarts the retxBSR_Timer.

When the BSR-related MAC PDU is formed, the UE cancels all the triggered BSR. The BSR-related MAC PDU is: the MAC PDU in which the BSR MAC CE is contained or the MAC PDU in which no BSR MAC CE is contained;

wherein the MAC PDU in which no BSR MAC CE is contained is applied in the following scenario: when there is a triggered BSR which has not been cancelled, and if the uplink resources can accommodate all pending data but cannot accommodate the BSR MAC CE and the subheader corresponding to the BSR MAC CE. Under the circumstance, the MAC PDU which is transmitted by occupying the uplink resources contains the MAC PDUs of all pending data, but not the BSR MAC CE.

In other words, the UE cancels all triggered BSRs in either of the following cases:

1. the uplink grant can accommodate all pending data, but cannot accommodate the BSR MAC CE and the subheader corresponding to the BSR MAC CE;

2. the BSR MAC CE is contained in the transmitted MAC PDU.

To sum up, the following operations are included during the BSR transmission: restarting the periodic BSR timer, restarting the retransmission BSR timer, and cancelling all triggered BSRs.

The failure of the BSR transmission will result in an absence of triggered BSRs of the UE in a certain period of time, for example:

1. since the periodic BSR timer is restarted, a new periodic BSR will not be triggered within a certain period of time;

2. since the retransmission BSR timer is restarted, a new regular BSR will not be triggered within a certain period of time;

3. the triggered BSRs are cancelled.

So, when the BSR transmission fails, even if the eNB has distributed the uplink resources for the UE to transmit the new data, the UE will not generate a BSR MAC CE to report the quantity of the data to be transmitted. The eNB, failing to learn the quantity of the data in the UE to be transmitted, may distribute improper uplink resources for the UE or even fail to distribute subsequent uplink resources for the UE, thus resulting in accumulation of the uplink data of the UE, thus failing to transmit the uplink data in a timely manner, and influencing the uplink transmission performance of the UE.

When the UE transmits the BSR by occupying the common uplink resources, the transmission reliability can be ensured by a Hybrid Auto Repeat Request (HARQ), thus, the probability of BSR transmission failure is relatively low. In other words, the influence on the UE due to the failure of the BSR transmission is relatively small when the BSR is transmitted by occupying the common uplink resources.

When the UE transmits the BSR by occupying the CB uplink resources, aside from the influence of the channel quality, conflicts may caused by the situation that the same CB resource is occupied by multiple UEs. In addition, considering the complexity of implementation, the CB transmission may not support the HARQ, thus the CB transmission has a higher possibility of failure than that of the transmission occupying common uplink resources. In other words, the influence on the UE due to the failure of the BSR transmission is relatively great when the BSR is transmitted by occupying the CB uplink resources.

### SUMMARY

In view of the above, the main object of the disclosure is to provide a method and apparatus for processing a BSR to solve the problem that the influence on the UE due to the failure of the BSR transmission is relatively great when a BSR is transmitted by occupying the CB uplink resources in the prior art.

To solve the problem above, the technical solutions of the disclosure are realized as follows.

A method for processing a Buffer Status Report (BSR) is provided by the disclosure, including:

when the BSR is transmitted using Contention Based (CB) uplink resources, at least one of the following processing steps is performed:

A. no retransmission BSR timer (retxBSR_Timer) is restarted when an uplink grant indicating the CB uplink resources is received;

B. no retxBSR_Timer and/or no periodic BSR timer (PeriodicBSR_Timer) is restarted when the uplink resources are available;

C. no triggered BSR is cancelled when a BSR-related Media Access Control Protocol Data Unit (MAC PDU) is formed by occupying the uplink resources; and the triggered BSR is cancelled when an indication for a successful transmission of the BSR-related MAC PDU is received; and

D. it is determined, according to a type of a triggered BSR, whether or not to cancel the triggered BSR, when a BSR-related MAC PDU is formed by occupying the uplink resources; and the triggered BSR is cancelled when an indication for a successful transmission of the BSR-related MAC PDU is received.

The step of determining whether or not to cancel the triggered BSR according to the type of the triggered BSR may include:

when the triggered BSR includes a regular BSR, the regular BSR is not cancelled when the MAC PDU is formed;

when the triggered BSR includes a periodic BSR, the periodic BSR is cancelled or not cancelled when the MAC PDU is formed;

when the triggered BSR includes a padding BSR, the padding BSR is cancelled when the MAC PDU is formed.

The method may further include: when the indication for the successful transmission of the BSR-related MAC PDU is received, the retxBSR_Timer and/or the PeriodicBSR_Timer are/is restarted.

The triggered BSR may be a BSR that is triggered before the MAC PDU is formed or is triggered simultaneously when the MAC PDU is formed, and is not cancelled after being triggered.

The disclosure further provides an apparatus for processing a Buffer Status Report (BSR). The apparatus includes: a BSR processing module configured to perform at least one of the following processing steps when the BSR is transmitted using Contention Based (CB) uplink resources:

A. no retransmission BSR timer (retxBSR_Timer) is restarted when an uplink grant indicating the CB uplink resources is received;

B. no retxBSR_Timer and/or no periodic BSR timer (PeriodicBSR_Timer) is restarted when the uplink resources are available;

C. no triggered BSR is cancelled when a BSR-related Media Access Control Protocol Data Unit (MAC PDU) is formed by occupying the uplink resources; and the triggered BSR is cancelled when an indication for a successful transmission of the BSR-related MAC PDU is received; and

D. it is determined, according to a type of a triggered BSR, whether or not to cancel the triggered BSR, when a BSR-related MAC PDU is formed by occupying the uplink resources; and the triggered BSR is cancelled when an indication for a successful transmission of the BSR-related MAC PDU is received.

The BSR processing module may further be configured to:

when the triggered BSR includes a regular BSR, not cancel the regular BSR when the MAC PDU is formed;

when the triggered BSR includes a periodic BSR, cancel or not cancel the periodic BSR when the MAC PDU is formed; and

when the triggered BSR includes a padding BSR, cancel the padding BSR when the MAC PDU is formed.

The BSR processing module may further be configured to restart the retxBSR_Timer and/or the PeriodicBSR_Timer when the indication for the successful transmission of the MAC PDU is received.

The triggered BSR may be a BSR that is triggered before the MAC PDU is formed or is triggered simultaneously when the MAC PDU is formed, and is not cancelled after being triggered.

The apparatus may be applied in a User Equipment (UE) or a Relay Node (RN).

By processing the BSR-related timer and cancelling the BSR, the method and apparatus for processing a BSR provided by the disclosure, reduces the influence on the UE due to the failure of the BSR transmission when the BSR is transmitted by occupying the CB resources, thus enabling the base station to accurately learn the quantity of data in the buffer area of the UE in time and distribute proper subsequent uplink resources for the UE, thereby optimizing the uplink scheduling.

### BRIEF DESCRIPTION OF THE DRAWINGS

Fig. 1 is a flowchart of acquiring the subsequent uplink transmission resources through contention in the prior art;

Fig. 2 is a flowchart of performing uplink transmission through pre-configuring resources in the prior art;

Fig. 3 is a flowchart of performing uplink transmission through contention based resources in the prior art;

Fig. 4 is a flowchart of the method for processing a BSR according to Embodiment 1 of the disclosure;

Fig. 5 is a flowchart of the method for processing a BSR according to Embodiment 2 of the disclosure;

Fig. 6 is a flowchart of the method for processing a BSR according to Embodiment 3 of the disclosure.

### DETAILED DESCRIPTION

The disclosure is described below with reference to the accompanying drawings and embodiments in details.

In order to reduce the influence on the UE due to the failure of the BSR transmission by occupying the CB resources, the disclosure provides a method for processing a BSR, aiming at improving the processing method of the BSR-related timer and the operation of cancelling the BSR when the BSR is transmitted by occupying the CB uplink resources.

Therefore, the disclosure provides at least one of the followings to process the BSR-related timer:

A1. no retxBSR_Timer is restarted when an uplink grant indicating the CB uplink resources is received; the uplink grant is not limited to transmit the BSR;

A2. no retxBSR_Timer and/or no PeriodicBSR_Timer are/is restarted when the uplink resources are available; optionally, the retxBSR_Timer and/or the PeriodicBSR_Timer are/is restarted when the indication for the successful transmission of the BSR-related MAC PDU is received, wherein the MAC PDU is transmitted by occupying the uplink resources.

The BSR cancellation provided by the disclosure includes at least one of the following ways:

B1. no triggered BSR is cancelled when the BSR-related MAC PDU is formed by occupying the uplink resources; and the triggered BSR is cancelled when the indication for the successful transmission of the BSR-related MAC PDU is received;

B2. it is determined whether or not to cancel the triggered BSR according to the type of a triggered BSR, when the BSR-related MAC PDU is formed by occupying the uplink resources; and the triggered BSR is cancelled when the indication for the successful transmission of the BSR-related MAC PDU is received;

wherein the step of determining whether or not to cancel the triggered BSR according to the type of a triggered BSR may specifically include:

when the triggered BSR includes a regular BSR, the regular BSR is not cancelled when the MAC PDU is formed;

when the triggered BSR includes a periodic BSR, the periodic BSR is not cancelled or cancelled when the MAC PDU is formed;

when the triggered BSR includes a padding BSR, the padding BSR is cancelled when the MAC PDU is formed.

During the BSR cancellation, the triggered BSR is a BSR that is triggered before the MAC PDU is formed or is triggered simultaneously when the MAC PDU is formed, and is not cancelled after being triggered. In addition, the processes for processing the BSR-related timer and any way to cancel the BSR can be applied in combination. The method for processing a BSR is further described below with reference to the embodiments in details.

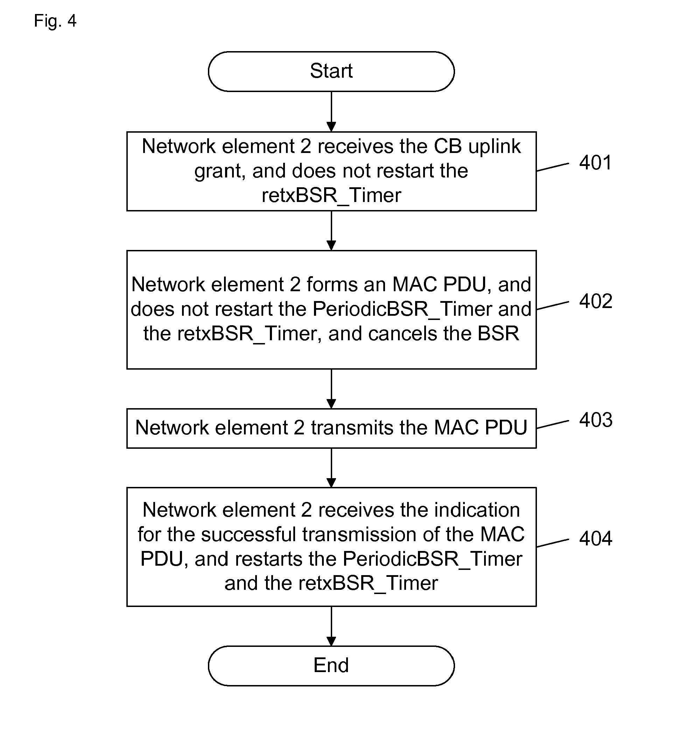

What is described in Embodiment 1 of the disclosure is that: when at least one triggered BSR which has not been cancelled exists, and if there are CB uplink resources which are distributed by network element 1 to network element 2 for network element 2 to transmit the new data, the method for processing the BSR-related timer in the disclosure is used in combination with a method for cancelling the BSR in the prior art. As shown in Fig. 4, the following steps are included.

Step 401: network element 2 receives a CB uplink grant sent by network element 1 to indicate network element 2 to transmit new data on the Uplink Shared Channel (UL-SCH); the retxBSR_Timer is not restarted by network element 2 at that moment;

the method for network element 2 to receive the CB uplink grant from network element 1 is that: network element 2 acquires the CB uplink grant at the downlink control channel according to a Contention Based Radio Network Temporary Identity (CB-RNTI) indication; the information of the CB uplink resources, e.g. resource block information, and modulation coding manner information, etc., is contained in the CB uplink grant.

Step 402: network element 2 forms the MAC PDU, does not restart the PeriodicBSR_Timer and the retxBSR_Timer at the moment, and cancels all triggered BSRs;

the MAC PDU is formed by network element 2 according to the uplink resources in Step 401; when the uplink resources are sufficient to accommodate all pending data, but insufficient to accommodate the BSR MAC CE and the subheader corresponding to the BSR MAC CE, the MAC PDU may not contain the BSR MAC CE, and only contains all pending data; at that moment, since all pending data has been transmitted by the MAC PDU, network element 1 can learn the quantity of the pending data of network element 2 even if the BSR MAC CE is not transmitted, i.e. network element 2 has no pending data at the moment; when the uplink resources are insufficient to accommodate all pending data, or when the uplink resources are sufficient to accommodate all pending data while accommodating the BSR MAC CE and the subheader corresponding to the BSR MAC CE, the MAC PDU then contains the BSR MAC CE; at that moment, network element 1 can learn the quantity of the pending data of network element 2 according to the information in the BSR MAC CE.

In this step, network element 2 does not restart the BSR-related timer (e.g. the PeriodicBSR_Timer and the retxBSR_Timer). Because of the conflict caused by the situation that the CB resources are to be occupied by multiple network elements, the probability of success of the BSR transmission by occupying the CB uplink grant is lower than probability of success of the BSR transmission by occupying the dedicated uplink resources. When the BSR transmission by occupying the CB uplink grant fails, not to restart the BSR-related timer can make the timer time out sooner, thus re-triggering the periodic BSR (if the PeriodicBSR_Timer times out) or the regular BSR (if the retxBSR_Timer times out) as early as possible.

Step 403: network element 2 transmits the MAC PDU.

Step 404: network element 2 receives the indication for the successful transmission of the MAC PDU from network element 1, restarts the PeriodicBSR_Timer at the moment and restarts the retxBSR_Timer.

What is described in this embodiment is an example of combining the method A1 and the method A2 for processing the BSR-related timer in the situation that the BSR-related timer includes both the PeriodicBSR_Timer and the retxBSR_Timer. Besides the example given in this embodiment, the following combinations are included for processing the BSR-related timer.

1. The method A1 in combination with the method A2:

1a. the BSR-related timer only includes the PeriodicBSR_Timer, and does not include the retxBSR_Timer; the difference between the rest processing steps and the steps of this embodiment is that: the PeriodicBSR_Timer is not restarted, and the retxBSR_Timer is restarted in Step 402; the PeriodicBSR_Timer is restarted and the retxBSR_Timer is optionally restarted in Step 404;

1b. the BSR-related timer only includes the retxBSR_Timer and does not include the PeriodicBSR_Timer; the difference between the rest processing steps and the steps of this embodiment is that: the retxBSR_Timer is not restarted, and the PeriodicBSR_Timer is restarted in Step 402; the retxBSR_Timer is restarted and the PeriodicBSR_Timer is optionally restarted in Step 404;

using this combination, the periodic BSR or the regular BSR can be re-triggered as early as possible, because the transmission processes are the same no matter if one BSR is triggered or multiple BSRs are triggered.

2. Method A2 is applied only and method A1 is not applied (i.e. the retxBSR_Timer is restarted in Step 401):

2a. the BSR-related timer includes both the PeriodicBSR_Timer and the retxBSR_Timer, the rest steps (Steps 402-404) are the same as that in the embodiment as shown in Fig. 4;

by this combination, the PeriodicBSR_Timer and the retxBSR_Timer are not restarted when the MAC PDU is formed so that the timer times out sooner to re-trigger the periodic BSR (if the PeriodicBSR_Timer times out) and the regular BSR (if the retxBSR_Timer times out) as early as possible;

2b. the BSR-related timer only includes the PeriodicBSR_Timer, and does not include the retxBSR_Timer; the difference between the rest processing steps and the steps of this embodiment is that: the PeriodicBSR_Timer is not restarted and the retxBSR_Timer is restarted in Step 402; the PeriodicBSR_Timer is restarted and the retxBSR_Timer is optionally restarted in Step 404;

by this combination, the periodic BSR can be re-triggered as early as possible because the transmission processes are the same no matter if one BSR is triggered or multiple BSRs are triggered;

2c. the BSR-related timer only includes the retxBSR_Timer, and does not include the PeriodicBSR_Timer; the difference between the rest processing steps and the steps of this embodiment is that: the retxBSR_Timer is not restarted and the PeriodicBSR_Timer is restarted in Step 402; the retxBSR_Timer is restarted and the PeriodicBSR_Timer is optionally restarted in Step 404;

by this combination, the regular BSR can be re-triggered as early as possible because the transmission processes are the same no matter if one BSR is triggered or multiple BSRs are triggered.

3. The method A1 is applied only and the method A2 is not applied, i.e. the PeriodicBSR_Timer is restarted and the retxBSR_Timer is restarted in Step 402; Step 401 and Step 403 are the same as that in the embodiment shown in Fig. 4, and optionally Step 404 is retained;

by this combination, the retxBSR_Timer is not restarted when the CB uplink grant is received so that the timer times out sooner to re-trigger the regular BSR as early as possible; in addition, since the timer has been restarted in Step 402, the time interval between Step 402 and Step 404 is very short, e.g. the time interval is within 4ms under the Frequency Division Duplex (FDD) situation in the LTE system, the timer does not have to be restarted in Step 404 and the influence on the system is small.

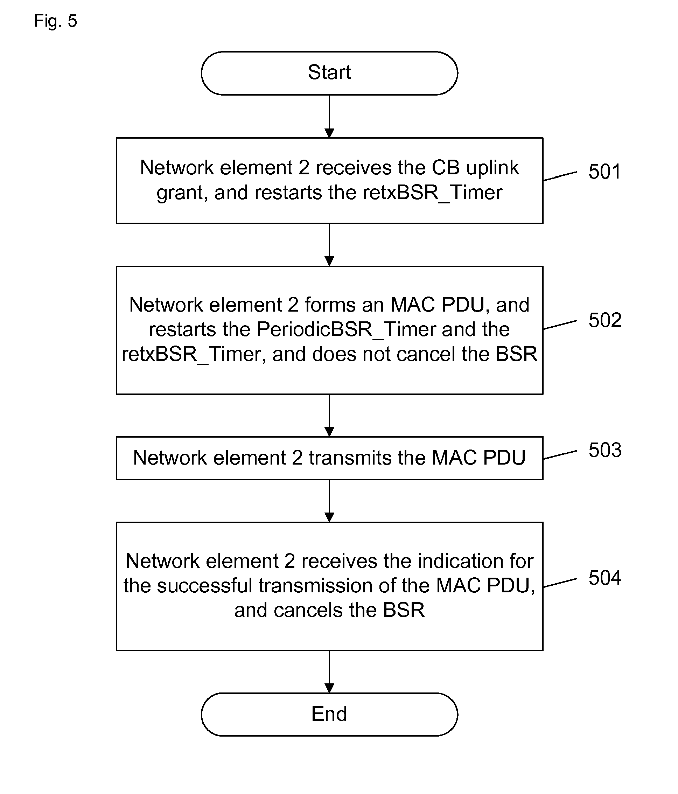

What is described in Embodiment 2 of the disclosure is that: when at least one triggered BSR which has not been cancelled exists, and if there are CB uplink resources which are distributed by network element 1 to network element 2 for network element 2 to transmit new data, the method for processing the BSR-related timer in the prior art is used in combination with a method for cancelling the BSR in the disclosure. As shown in Fig. 5, the following steps are included.

Step 501: network element 2 receives a CB uplink grant sent by network element 1 to indicate network element 2 to transmit the new data on the UL-SCH; the retxBSR_Timer is restarted by network element 2 at the moment;

the method for network element 2 to receive the CB uplink grant from network element 1 is the same as that described in Step 401 in Embodiment 1, which will not be repeated here.

Step 502: network element 2 forms the MAC PDU, restarts the PeriodicBSR_Timer and the retxBSR_Timer at the moment, and does not cancel all triggered BSRs.

The method for network element 2 to form the MAC PDU is the same as that described in Step 401 in Embodiment 1, which will not be repeated here.

At the moment, all triggered BSRs are not cancelled, when there is uplink grant, whether it is CB or not, for transmitting new data subsequently, network element 2 will use the uplink grant to transmit the BSR since there are triggered BSRs which have not been cancelled. In other words, even if the current BSR transmission using the CB uplink grant fails, the transmission can be performed again subsequently.

In this embodiment, the BSR cancellation may further include: different types of BSRs are processed differently in Step 502; when the BSR is a regular BSR, it will not be cancelled; when the BSR is a padding BSR, it will then be cancelled; when the BSR is a periodic BSR, it may be cancelled optionally. Since the padding BSR is a complementary BSR, the influence on scheduling network element 2 by network element 1 is small even if there is no padding BSR. Therefore, the padding BSR can be cancelled here.

Step 503: network element 2 transmits the MAC PDU.

Step 504: network element 2 receives the indication for the successful transmission of the MAC PDU from network element 1, and cancels all triggered BSRs.

The triggered BSRs refer to the BSRs triggered in Step 502 and before Step 502, which have not been cancelled. Since there is a certain time interval between Step 502 and Step 504, it is possible that new BSRs are triggered during the time interval; the successful transmission of the MAC PDU will not result in the cancellation of these new triggered BSRs, because the indicated quantity of the data to be transmitted in the buffer area in these BSRs is different from the quantity of the data which is indicated in the MAC PDU.

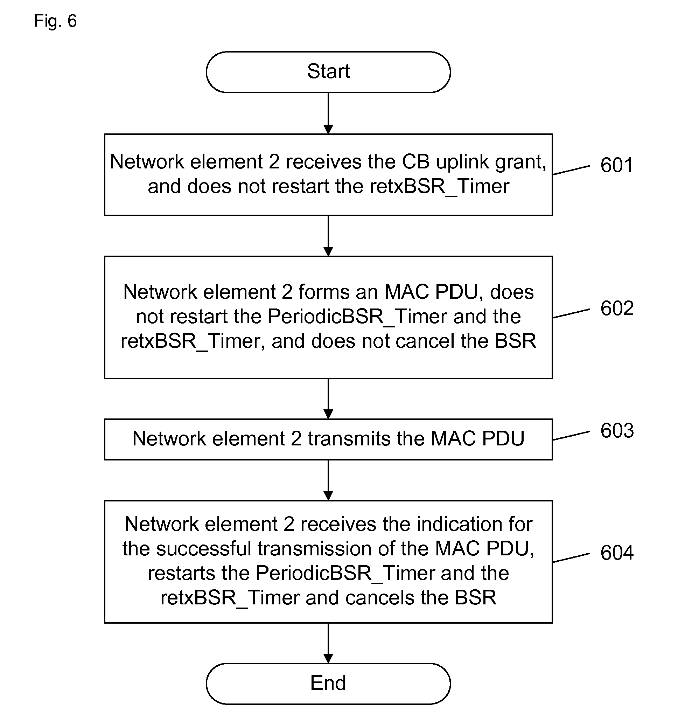

What is described in Embodiment 3 of the disclosure is that: when at least one triggered BSR which has not been cancelled exists, and if there are CB uplink resources which are distributed by network element 1 to network element 2 for network element 2 to transmit new data, the method for processing the BSR-related timer in the disclosure is used in combination with a method for cancelling the BSR in the disclosure. As shown in Fig. 6, the following steps are included.

Step 601: network element 2 receives a CB uplink grant sent by network element 1 to indicate network element 2 to transmit the new data on the UL-SCH; the retxBSR_Timer is not restarted by network element 2 at the moment.

Step 602: network element 2 forms the MAC PDU, does not restart the PeriodicBSR_Timer and the retxBSR_Timer at the moment, and does not cancel all triggered BSRs.

In this embodiment, the BSR cancellation may further include: different types of BSRs are processed differently in Step 602; when the BSR is a regular BSR, it will not be cancelled; when the BSR is a padding BSR, it will be cancelled; when the BSR is a periodic BSR, it may be cancelled optionally. Since the padding BSR is a complementary BSR, the influence on scheduling network element 2 by network element 1 is small even if there is no padding BSR. Therefore, the padding BSR can be cancelled here.

Step 603: network element 2 transmits the MAC PDU.

Step 604: network element 2 receives the indication for the successful transmission of the MAC PDU from network element 1, restarts the PeriodicBSR_Timer, restarts the retxBSR_Timer and cancels all triggered BSRs.

The triggered BSRs refer to the BSRs triggered in Step 602 and before Step 602, which have not been cancelled. Since there is a certain time interval between Step 602 and Step 604, it is possible that new BSRs are triggered during the time interval. The successful transmission of the MAC PDU will not result in the cancellation of these new triggered BSRs, because the indicated quantity of the data to be transmitted in the buffer area in these BSRs is different from the quantity of the data which is indicated in the MAC PDU.

What is described in this embodiment is an example of combining method A1 and method A2 for processing the BSR-related timer in the situation that the BSR-related timer includes both the PeriodicBSR_Timer and the retxBSR_Timer. Besides the example given in this embodiment, the following combinations are included for processing the BSR-related timer.

1. The method A1 in combination with the method A2:

1a. the BSR-related timer only includes the PeriodicBSR_Timer, and does not include the retxBSR_Timer; what is different from the embodiment shown in Fig. 6 is that: the PeriodicBSR_Timer is not restarted, and the retxBSR_Timer is restarted in Step 602; the PeriodicBSR_Timer is restarted and the retxBSR_Timer is optionally restarted in Step 604;

1b. the BSR-related timer only includes the retxBSR_Timer and does not include the PeriodicBSR_Timer; what is different from the embodiment shown in Fig. 6 is that: the retxBSR_Timer is not restarted, and the PeriodicBSR_Timer is restarted in Step 602; the retxBSR_Timer is restarted and the PeriodicBSR_Timer is optionally restarted in Step 604.

Using this combination, the periodic BSR or the regular BSR can be re-triggered as early as possible, because the transmission processes are the same no matter if one BSR is triggered or multiple BSRs are triggered.

2. Method A2 is applied only and method A1 is not applied (i.e. the retxBSR_Timer is restarted in Step 601):

2a. the BSR-related timer includes both the PeriodicBSR_Timer and the retxBSR_Timer, the rest steps (Steps 602-604) are the same as that in the embodiment shown in Fig. 6;

by this combination, the PeriodicBSR_Timer and the retxBSR_Timer are not restarted when the MAC PDU is formed so that the timer times out sooner to re-trigger the periodic BSR (if the PeriodicBSR_Timer times out) or the regular BSR (if the retxBSR_Timer times out) as early as possible;

2b. the BSR-related timer only includes the PeriodicBSR_Timer, and does not include the retxBSR_Timer; the difference between the rest processing steps and the steps of this embodiment is that: the PeriodicBSR_Timer is not restarted and the retxBSR_Timer is restarted in Step 602; the PeriodicBSR_Timer is restarted and the retxBSR_Timer is optionally restarted in Step 604;

by this combination, the periodic BSR can be re-triggered as early as possible because the transmission processes are the same no matter if one BSR is triggered or multiple BSRs are triggered;

2c. the BSR-related timer only includes the retxBSR_Timer, and does not include the PeriodicBSR_Timer; the difference between the rest processing steps and the steps of this embodiment is that: the retxBSR_Timer is not restarted and the PeriodicBSR_Timer is restarted in Step 602; the retxBSR_Timer is restarted and the PeriodicBSR_Timer is optionally restarted in Step 604;

by this combination, the regular BSR can be re-triggered as early as possible because the transmission processes are the same no matter if one BSR is triggered or multiple BSRs are triggered.

3. The method A1 is applied only and the method A2 is not applied, i.e. the PeriodicBSR_Timer is restarted and the retxBSR_Timer is restarted in Step 602; Step 601 and Step 603 are the same as that in the embodiment shown in Fig. 6, and optionally Step 604 is retained;

by this combination, the retxBSR_Timer is not restarted when the CB uplink grant is received so that the timer times out sooner to re-trigger the regular BSR as early as possible; in addition, since the timer has been restarted in Step 602, the time interval between Step 602 and Step 604 is very short, e.g. the time interval is within 4ms under the FDD situation in the LTE system, the timer does not have to be restarted in Step 604 and the influence on the system is small.

It needs to be pointed out that, network element 1, network element 2, and the subframes used for sending the BSR-related MAC PDUs have the following combinations:

a. network element 1 is the eNB, and network element 2 is the UE; the subframe is each subframe under the FDD situation, and the subframe is an uplink subframe under the Time Division Duplex (TDD) situation;

b. network element 1 is the Relay Node (RN) and network element 2 is the UE; the subframe is the uplink subframe of the Uu;

c. network element 1 is the Donor eNB (DeNB), network element 2 is the RN, and the subframe is the uplink subframe of the Un.

Corresponding to the method for processing a BSR above, the disclosure further provides an apparatus for processing a BSR, which is applied in the UE or the RN. The apparatus includes a BSR processing module configured to perform at least one of the following processing steps when the BSR is transmitted using the CB uplink resources:

A. no retransmission BSR timer (retxBSR_Timer) is restarted when an uplink grant indicating the CB uplink resources is received;

B. no retxBSR_Timer and/or no periodic BSR timer (PeriodicBSR_Timer) is restarted when the uplink resources are available;

C. no triggered BSR is cancelled when a BSR-related Media Access Control Protocol Data Unit (MAC PDU) is formed; and the triggered BSR is cancelled when an indication for a successful transmission of the BSR-related MAC PDU is received; and

D. it is determined, according to a type of a triggered BSR, whether or not to cancel the triggered BSR, when a BSR-related MAC PDU is formed; and the triggered BSR is cancelled when an indication for a successful transmission of the BSR-related MAC PDU is received.

Preferably, the BSR processing module is further configured to: when the triggered BSR includes a regular BSR, the regular BSR is not cancelled when the MAC PDU is formed; when the triggered BSR includes a periodic BSR, the periodic BSR is not cancelled or cancelled when the MAC PDU is formed; when the triggered BSR includes a padding BSR, the padding BSR is cancelled when the MAC PDU is formed.

The BSR processing module is further configured to restart the retxBSR_Timer and/or the PeriodicBSR_Timer when the indication for the successful transmission of the MAC PDU is received.

What needs to be explained is that there is no limitation to the indication for the successful BSR transmission or the BSR transmission failure. According to the disclosed existing mechanism, network element 1 sends a downlink (DL) assignment or a uplink (UL) grant at the fixed offset to network element 2 which performs the successful transmission, wherein indications for the CB RNTI and C-RNTI (e.g. the C-RNTI MAC CE is applied) are contained in the DL assignment or the UL grant; or it is regarded as a successful transmission when network element 2 receives the DL assignment or the UL grant within a certain period of time after transmitting the BSR.

The BSR-related MAC PDU described in the disclosure is consistent with the prior art, i.e. the MAC PDU is the MAC PDU in which the BSR MAC CE is contained or the MAC PDU in which no BSR MAC CE is contained, wherein the MAC PDU in which no BSR MAC CE is contained is applied when there is a triggered BSR which has not been cancelled and if the uplink resources can accommodate all pending data, but cannot accommodate the BSR MAC CE and the subheader corresponding to the BSR MAC CE. The MAC PDU which is transmitted by occupying the uplink resources contains MAC PDUs of all pending data, but not contains the BSR MAC CE.

What are described above are only the preferred embodiments of the disclosure and not intended to limit the scope of protection of the disclosure.

## Claims

1. A method for processing a Buffer Status Report (BSR), comprising:
performing at least one of following processing steps, when the BSR is transmitted using Contention Based (CB) uplink resources:
A. restarting no retransmission BSR timer (retxBSR_Timer) when an uplink grant indicating the CB uplink resources is received;
B. restarting no retxBSR_Timer and/or no periodic BSR timer (PeriodicBSR_Timer) when the uplink resources are available;
C. cancelling no triggered BSR when a BSR-related Media Access Control Protocol Data Unit (MAC PDU) is formed by occupying the uplink resources; and cancelling the triggered BSR when an indication for a successful transmission of the BSR-related MAC PDU is received; and
D. determining, according to a type of a triggered BSR, whether or not to cancel the triggered BSR, when a BSR-related MAC PDU is formed by occupying the uplink resources; and cancelling the triggered BSR when an indication for a successful transmission of the BSR-related MAC PDU is received.

2. The method according to claim 1, wherein the determining whether or not to cancel the triggered BSR according to the type of the triggered BSR comprises:
when the triggered BSR comprises a regular BSR, not cancelling the regular BSR when the MAC PDU is formed;
when the triggered BSR comprises a periodic BSR, cancelling or not cancelling the periodic BSR when the MAC PDU is formed; and
when the triggered BSR comprises a padding BSR, cancelling the padding BSR when the MAC PDU is formed.

3. The method according to claim 1 or 2, further comprising:
restarting the retxBSR_Timer and/or the PeriodicBSR_Timer when the indication for the successful transmission of the BSR-related MAC PDU is received.

4. The method according to claim 1 or 2, wherein the triggered BSR is a BSR that is triggered before the MAC PDU is formed or is triggered simultaneously when the MAC PDU is formed, and is not cancelled after being triggered.

5. An apparatus for processing a Buffer Status Report (BSR), comprising: a BSR processing module configured to perform at least one of following processing steps when the BSR is transmitted using Contention Based (CB) uplink resources:
A. restarting no retransmission BSR timer (retxBSR_Timer) when an uplink grant indicating the CB uplink resources is received;
B. restarting no retxBSR_Timer and/or no periodic BSR timer (PeriodicBSR_Timer) when the uplink resources are available;
C. cancelling no triggered BSR when a BSR-related Media Access Control Protocol Data Unit (MAC PDU) is formed by occupying the uplink resources; and cancelling the triggered BSR when an indication for a successful transmission of the BSR-related MAC PDU is received; and
D. determining, according to a type of a triggered BSR, whether or not to cancel the triggered BSR, when a BSR-related MAC PDU is formed by occupying the uplink resources; and cancelling the triggered BSR when an indication for a successful transmission of the BSR-related MAC PDU is received.

6. The apparatus according to claim 5, wherein the BSR processing module is further configured to:
when the triggered BSR comprises a regular BSR, not cancel the regular BSR when the MAC PDU is formed;
when the triggered BSR comprises a periodic BSR, cancel or not cancel the periodic BSR when the MAC PDU is formed; and
when the triggered BSR comprises a padding BSR, cancel the padding BSR when the MAC PDU is formed.

7. The apparatus according to claim 5 or 6, wherein the BSR processing module is further configured to restart the retxBSR_Timer and/or the PeriodicBSR_Timer when the indication for the successful transmission of the MAC PDU is received.

8. The apparatus according to claim 5 or 6, wherein the triggered BSR is a BSR that is triggered before the MAC PDU is formed or is triggered simultaneously when the MAC PDU is formed, and is not cancelled after being triggered.

9. The apparatus according to claim 5 or 6, wherein the apparatus is applied in a User Equipment (UE) or a Relay Node (RN).
